# FASCICULE DE BREVET EUROPEEN

(11) **EP 0 864 270 B1**
(45) Date de publication et mention de la délivrance du brevet: **16.05.2001**
(21) Numéro de dépôt: 98400462.2
(22) Date de dépôt: 26.02.1998
(51) Int. Cl.: A45D 40/16, A45D 33/00, B29C 39/02

(54) **Procédé de remplissage d'un boîtier avec au moins deux produits, et boîtier rempli selon ce procédé**
Verfahren zum Füllen eines Behälters mit mindestens zwei Produkten und nach diesem Verfahren gefüllter Behälter
Method of filling a container with at least two products and container filled using that method

(30) Priorité: 14.03.1997 FR 9703115
(43) Date de publication de la demande: 16.09.1998
(73) Titulaire: L'OREAL, 75008 Paris (FR)
(72) Inventeur: Joulia, Gérard, 75019 Paris (FR)
(74) Mandataire: Boulard, Denis

(56) Documents cités:
- EP-A- 0 191 198
- EP-A- 0 628 393
- WO-A-86/00798
- US-A- 4 337 859

## Description

La présente invention a trait à un procédé de remplissage par coulage, d'un boîtier, au moyen de deux ou plusieurs produits différents, notamment par leur teinte. Les produits sont mis en place, selon l'invention, par coulage, de préférence à froid, dans un boîtier, sous forme liquéfiée. Les produits ainsi coulés, se transforment, après solidification, en un "pain" ou "cake" solide et- délitable, pouvant être prélevé, par l'utilisatrice, à l'aide d'un doigt, d'une houppette ou d'un pinceau. L'invention vise également un boîtier obtenu au moyen du procédé selon l'invention. Les produits conditionnés peuvent être notamment, des fards à joues, des ombres à paupières, des fonds de teint, etc. L'invention est tout particulièrement adaptée aux produits à base de plâtre hydraté (CaSO₄, 2H₂O).

Les produits de maquillage cosmétiques poudres (fard à paupières, fard à joues, etc.) présentant plusieurs teintes, et conditionnés dans un boîtier par compactage sont connus et utilisés depuis longtemps. Les qualités cosmétiques des produits compactés ne sont pas totalement satisfaisantes.

Récemment sont apparus des produits de maquillage, introduits dans un boîtier par coulage de formulations à base de plâtre. De tels boîtiers sont mono-produit, et en particulier, mono-couleur, en raison de la difficulté à couler dans un même boîtier, deux produits différents, arrangés à l'intérieur de volumes déterminés. En effet, lorsque l'on coule deux produits à l'intérieur d'un même volume, ceux-ci ont tendance à se répartir de manière aléatoire à l'intérieur du volume, ce qui pose notamment des problèmes d'esthétique du produit fini.

Une solution connue du document EP 191 198 consiste à réaliser un boîtier présentant autant de compartiments que de produits à couler. A cet effet, le boîtier définit une pluralité de compartiments, délimités par des parois (en matériau identique au matériau formant le corps du boîtier) moulées de manière adéquate. Le problème d'une telle solution tient, hormis au coût supplémentaire qu'elle engendre, essentiellement au fait que de telles parois intermédiaires font obstacle à une vidange complète ou quasi complète du boîtier, en particulier si elles délimitent un ou plusieurs petits volumes. Par ailleurs, un tel boîtier multi compartiments offre peu de flexibilité quant à la disposition, à la forme, et à la taille des volumes occupés par chacun des produits. Une telle solution est tout particulièrement inadaptée, si l'on souhaite utiliser de tels produits de différentes couleurs, pour représenter à la surface du produit, un logo ou tout autre dessin, un peu compliqué.

Aussi, est-ce un des objets de l'invention que de fournir un procédé de remplissage par coulage, d'un boîtier, au moyen de deux ou plusieurs produits différant, par exemple, par leur couleur, et qui offre une grande flexibilité en termes de nombre de produits, de taille, de forme et de disposition des volumes occupés par chacun des produits. Selon l'invention, les produits peuvent différer par une caractéristique autre que leur couleur.

C'est en particulier un objet de l'invention que de fournir un procédé pour couler plusieurs produits à l'intérieur d'un même boîtier, et qui permette d'obtenir un produit fini, dans lequel, les volumes occupés par chacun des produits, ne sont pas isolés physiquement par des parois intermédiaires.

C'est un autre objet de l'invention que de fournir un boîtier rempli par le procédé selon l'invention.

D'autres objets encore, apparaîtront de manière détaillée dans la description qui suit.

Selon l'invention, ces objets sont atteints en réalisant un procédé de remplissage d'un boîtier d'axe X, par coulage en phase liquide d'au moins deux produits A et B contenant un solvant, et ne devant pas se mélanger de manière sensible sur au moins une partie de la hauteur axiale du boîtier, ledit boîtier comportant un fond et un couvercle, ledit procédé consistant à : a) monter dans le boîtier, au moins une fine membrane en un matériau soluble dans le solvant d'au moins un des produits, la membrane étant disposée de manière à délimiter à l'intérieur du boîtier, au moins un premier volume et un second volume, lesdits premier et second volumes étant isolés l'un de l'autre sur au moins une partie de la hauteur axiale du boîtier; b) couler le produit A dans le premier volume, et le produit B dans le second volume; et c) laisser sécher, de manière à figer lesdits produits, la membrane se solubilisant dans ledit solvant, lors du figeage des produits A et B à l'intérieur du premier volume, respectivement du second volume. Ainsi, lors du figeage, la membrane disparaît progressivement, en se solubilisant dans le solvant du (ou des) produit(s). Les produits restent à l'intérieur des volumes respectifs délimités initialement par la (ou les) membrane(s). Après séchage complet, il reste éventuellement une fine fente séparant les produits, correspondant sensiblement à l'épaisseur de la membrane.

Avantageusement, les deux produits sont coulés simultanément. Cette caractéristique est particulièrement avantageuse lorsque l'on utilise une membrane de très faible épaisseur, afin de ne pas provoquer un affaissement ou un effondrement de celle-ci, sous l'effet d'une pression trop importante d'un coté seulement de la membrane. Cette condition est plus ou moins critique également en fonction du mode de fixation de la membrane, par exemple, sur le fond ou sur le couvercle.

A titre d'exemple, les deux volumes sont concentriques. Selon un autre exemple, le boîtier est de section circulaire. Le volume qu'il délimite est divisé en une pluralité de portions angulaires, de tailles identiques ou différentes. A titre d'exemple encore, l'un des produits est contenu à l'intérieur d'un volume représentant un logo commercial.

Dans le cas ou le solvant de l'un et/ou l'autre des produits est de l'eau, la membrane peut être constituée de gélatine animale ou végétale, d'alcool polyvinylique de type Hydrolène®, Polyviol®, Elvanol®, Mowiol® ou Phodoviol®.

Les produits peuvent être des produits à base de plâtre et d'eau, auxquels sont ajoutées différentes charges (colorant/pigment, nacre, conservateur, mica parfum), les produits A et B pouvant être de couleur différente. A titre d'exemple, les produits sont des fards à paupières, des fards à joues, des fonds de teint, etc..

Afin d'accélérer le séchage des produits, le boîtier est introduit, de préférence après figeage des produits, dans une étuve ventilée.

Dans une forme de réalisation particulière de l'invention, les produits sont coulés au travers d'une ouverture ménagée dans le fond, après avoir retourné le boîtier, le couvercle faisant office de fond lors du coulage des produits, ladite membrane étant montée sur le couvercle. Cette caractéristique est particulièrement avantageuse, lorsque l'on souhaite conférer à la surface libre du produit un profil particulier, correspondant au profil interne du couvercle. A titre d'exemple, le couvercle présente une forme de dôme.

A cet effet, la membrane peut présenter une première extrémité montée sur le couvercle, et une seconde extrémité, libre, opposée à ladite première extrémité, la membrane étant de hauteur axiale inférieure à la hauteur axiale du boîtier, les deux volumes communiquant entre eux au niveau de ladite seconde extrémité, le produit A est coulé sur une première hauteur sensiblement égale à la hauteur axiale de la membrane, le produit B étant coulé sur une hauteur supérieure à la hauteur axiale de la membrane, de manière à permettre, lors de la solidification des produits A et B, l'accrochage du produit A par le produit B, des moyens étant prévus au voisinage du fond du boîtier, pour permettre l'accrochage du produit B dans le boîtier. De tels moyens d'accrochage peuvent comporter au moins un bloc de mousse à cellules ouvertes ou semi ouvertes. Ainsi, avec un tel mode de réalisation, il est possible de réaliser un boîtier, contenant des produits qui, au moins au voisinage de la surface libre du boîtier, sont arrangés selon un dessin particulier, permettant, dans le cas de produits de couleur différente, de réaliser des motifs colorés, arrangés à souhait. Un tel arrangement offre de nombreuses possibilités, notamment en terme d'esthétique.

Alternativement, lorsque le coulage du produit se fait par l'ouverture située en regard du couvercle, la membrane est montée sur le fond du boîtier, en appui par exemple sur le bord annulaire interne de l'anneau de mousse servant à l'accrochage du produit.

Selon un mode de réalisation possible, la membrane est maintenue sur le couvercle, au moyen de rainures réalisées sur une face interne du couvercle, et aptes à recevoir un bord d'extrémité de ladite membrane. Alternativement, un renfoncement (ou une surépaisseur) est réalisé(e) sur la face interne du couvercle, ledit renfoncement (ou ladite surépaisseur) étant délimité(e) par un bord rentrant (ou saillant) par rapport à la surface interne du couvercle, contre lequel un bord d'extrémité de la membrane est en appui, la surface libre du produit en regard du couvercle, présentant une surépaisseur (ou un renfoncement) de section correspondant sensiblement à la section dudit renfoncement (ou à ladite surépaisseur). Cette dernière configuration permet de créer un relief à la surface du produit, et est tout particulièrement adaptée à la réalisation d'un logo commercial. Alternativement encore, la membrane est maintenue sur le couvercle, par collage ou soudure d'un bord d'extrémité de ladite membrane sur une face interne du couvercle, ou est réalisée par bi-injection avec le couvercle.

Le boîtier, en particulier le couvercle, peut être transparent ou translucide, de manière à rendre visibles depuis l'extérieur les couleurs des produits contenus dans le boîtier.

L'invention consiste, mises à part les dispositions exposées ci-dessus, en un certain nombre d'autres dispositions qui seront explicitées ci-après, à propos d'exemples de réalisation non limitatifs, décrits en référence aux figures annexées, parmi lesquelles :
- les figures 1A à 1E illustrent les différentes étapes d'un mode de réalisation du procédé selon l'invention; et
- les figures 2A et 2B illustrent deux boîtiers différents remplis au moyen du procédé selon l'invention.

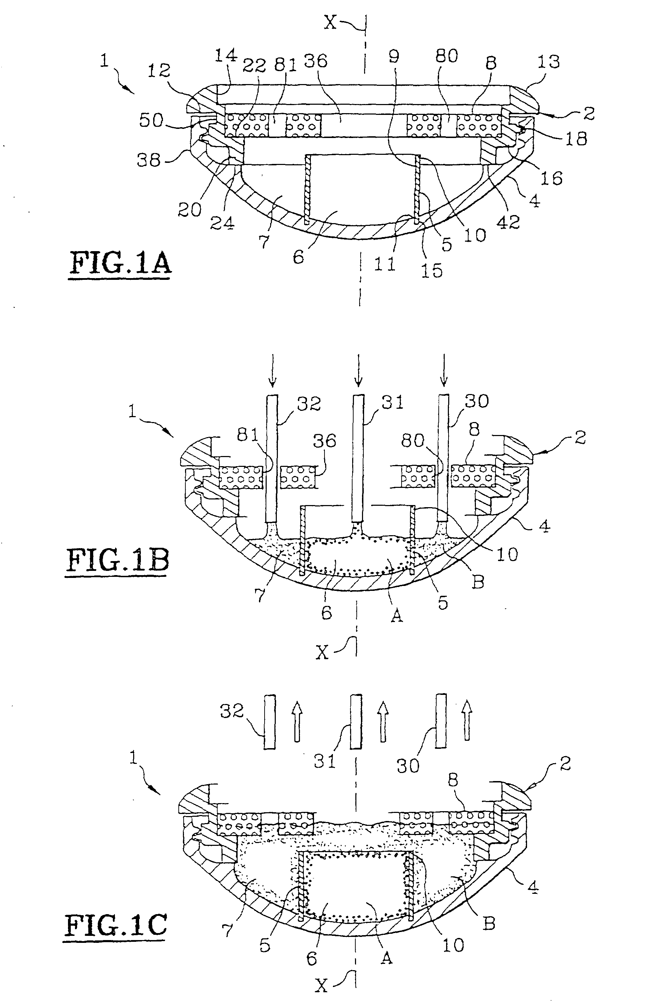

La figure 1A représente un boîtier 1 tel que pouvant être utilisé pour la mise en oeuvre du procédé selon l'invention. Tel que représenté, le boîtier est retourné et ouvert en son fond 2, de manière à permettre son remplissage par le fond. Le boîtier 1 présente un axe de rotation X et se compose d'un fond 2 définissant un réceptacle, surmonté d'un couvercle, de préférence transparent 4, et d'une rondelle en mousse alvéolaire 8.

Le fond 2 présente une structure annulaire et comporte une embase 12 munie d'une large ouverture centrale 14 destinée à être obturée après remplissage, par un bouchon 100 (non représenté).

Du côté du fond, l'embase 12 présente une périphérie 13 de forme arrondie, sensiblement en quart de cercle. Du coté opposé au fond 12, l'embase porte une courte portion cylindrique 16, de diamètre plus faible que celui de l'embase 12, cette portion 16 étant pourvue d'un filetage externe 18 servant à la fixation par vissage du couvercle 4. A la portion 16, est raccordée une jupe cylindrique 20 dont le diamètre est plus faible que celui de la portion 16, et formant un décrochement interne 22. La jupe 20 présente une extrémité libre formant un bord cylindrique 24. La portion cylindrique 16 forme avec le fond 2 une gorge annulaire 50 apte a recevoir une nervure annulaire formée par le bord d'accrochage d'un boîtier auxiliaire (non représenté) dans lequel peut être monté de manière amovible le boîtier 1.

A l'intérieur du réceptacle 2 est placée la rondelle 8. Elle comporte une ouverture centrale 36 et plusieurs ouverture latérales 80, 81 pour permettre, comme on le verra plus en détail par la suite, le remplissage au travers de l'ouverture 14 du fond 2, des différents volumes définis à l'intérieur du boîtier. La rondelle 8 s'étend radialement jusqu'à la portion cylindrique 16 et est maintenue sous le décrochement 22 où elle est fixée par soudage thermique ou aux ultrasons. La rondelle 8 est réalisée en mousse alvéolaire à cellules ouvertes, par exemple en mousse de polyéthylène ou de polyuréthane, élastiquement compressible. Elle forme des moyens d'accrochage du produit à l'intérieur du boîtier. Elle peut être également rendue solidaire du fond 2 par collage, ou par tout autre moyen adapté.

Le couvercle 4 est conformé en calotte, et est moulé en un matériau, de préférence, transparent. On peut utiliser, par exemple du polystyrène. Il présente un flanc cylindrique 38, pourvu à l'intérieur d'un filetage, apte à coopérer avec le filetage 18 du fond 2. Le couvercle 4 présente, en outre, une saillie interne 42 annulaire, apte à venir en appui contre le bord 24 de la jupe 20, lorsque le couvercle est fixé sur le fond 2.

Sur la surface interne du couvercle, est montée une membrane 5, constituée d'un matériau soluble dans au moins un solvant entrant dans la composition d'au moins un produit. Dans le cas de produits à base de plâtre et d'eau comme solvant, la membrane est réalisée en gélatine animale ou végétale, ou en alcool polyvinylique (PVA). A titre d'exemple, on utilise des produits connus sous la dénomination commerciale : Hydrolène®, commercialisé par la société IDROPLAST, Polyviol®, commercialisé par la société WACKER, Elvanol®, commercialisé par la société Du Pont de Nemours, Mowiol®, commercialisé par la société HOECHST, ou Phodoviol®, commercialisé par RP Spécialités. La membrane est montée de manière à délimiter deux volumes concentriques 6, 7. Sa hauteur selon l'axe X est légèrement inférieure à la hauteur du boîtier sous la mousse, de sorte que les deux volumes ainsi délimités, communiquent entre eux par l'ouverture 9 délimitée par le bord libre 10 de la membrane 5.

La membrane 5 peut être montée sur la surface interne du couvercle 4 par n'importe quel moyen approprié. Dans le mode de réalisation illustré, le bord 11 de la membrane 5, opposé au bord libre 10, est inséré à l'intérieur d'une rainure 15 ménagée sur la surface interne du couvercle. Une telle rainure peut être obtenue de moulage avec le couvercle 4. Alternativement, un léger renfoncement (par exemple, de l'ordre de 1 mm de hauteur), de section sensiblement identique à la section du volume 6, est réalisé dans la face interne du couvercle, ledit renfoncement étant délimité par un bord, à l'intérieur duquel le bord d'extrémité 11 de la membrane 5 est en appui. Une telle structure à renfoncement permet d'avoir la surface libre du volume central 6, en surépaisseur par rapport à la surface libre du volume annulaire 7. Un effet de relief inversé est obtenu en réalisant sur la face interne du couvercle une légère surépaisseur, délimitée par un bord saillant par rapport à la surface interne du couvercle. Le bord d'extrémité 11 de la membrane est enfilé, plus ou moins à force, sur le bord de la surépaisseur. Dans le produit fini, on observe un léger renfoncement sur la surface libre du produit, lequel renfoncement a une section sensiblement identique à la section de la surépaisseur dans le couvercle.

Alternativement encore, la membrane est maintenue sur le couvercle, par collage ou soudure d'un bord d'extrémité de ladite membrane sur la face interne du couvercle, ou peut être réalisée par bi-injection avec le couvercle, en choisissant de manière appropriée les matériaux formant d'une part le couvercle, et d'autre part la membrane. La membrane peut avoir une épaisseur comprise entre 0,1 mm et 1 mm.

A la figure 1B, les produits A et B sont coulés simultanément, au moyen de cannes de remplissage 30, 31, 32, qui sont descendues dans les volumes 6 et 7 au travers des ouvertures 36, 80, 81, du bloc de mousse 8, via le fond du boîtier. Typiquement, dans le cas d'un boîtier de section circulaire, on utilise une canne centrale 31, pour le remplissage du volume 6 en produit A, et deux ou plusieurs cannes latérales 30, 32, pour le remplissage de façon homogène de la zone annulaire 7. Le coulage des produits s'effectue de préférence, à température ambiante.

Toutefois, à titre indicatif, les produits de maquillage liquéfiés peuvent être présentés sous forme de pâte, obtenue en mélangeant une phase particulaire solide, soit avec une phase aqueuse, soit avec un liant, notamment une phase grasse dans un solvant ; ils peuvent également être sous forme d'un produit à base de cires thermofusibles ou d'un gel, qui est coulé à l'état chaud. Selon le type de composition choisi, la solidification se fait donc, soit par évaporation d'eau ou de solvant, soit par refroidissement, soit par réaction chimique. Dans un mode de réalisation de l'invention, on utilise des formules à base de plâtre (environ 25%), contenues dans de l'eau (40% à 42,5% pour un fard à joues, et 45% à 50% pour un fard à paupières), auxquelles on rajoute des charges tels que des colorants, des pigments, du nacre, des conservateurs, du mica, du parfum, etc..

Le remplissage du volume 6, en produit A se poursuit jusqu'à ce que le niveau atteigne sensiblement le bord libre 10 de la membrane 5. On retire alors la canne centrale 31, et on continue le coulage du produit B dans le volume annulaire 7, jusqu'à ce que le niveau de produit atteigne environ la moitié de la hauteur du bloc de mousse 8. Bien évidemment, au dessus de la membrane 5, le produit B se répartit sur toute la section du boîtier 1, y compris au dessus du volume central 6. Toutefois, les produits ne se mélangent pas de manière sensible (hormis une légère diffusion au voisinage de l'interface entre les deux produits, laquelle diffusion permet lors de la solidification des produits, l'accrochage du produit A par le produit B.

A la figure 1C, on retire les cannes de remplissage 30, 31, 32. Le boîtier est rempli jusqu'à une hauteur voisine de la moitié du bloc de mousse 8. S'ensuit ensuite une période de prise en masse ou de figeage des produits A et B. Pour des formulations à base de plâtre du type de celles décrites précédemment, le durcissement s'effectue pendant une période de 20 mn à 30 mn. Pendant cette période, la membrane se solubilise dans l'eau contenue dans les formules des produits A et B, et disparaît progressivement, laissant place éventuellement à une fine fente 34 correspondant sensiblement à l'épaisseur de la membrane 5. Les produits figés occupent les volumes tels que délimités initialement par la membrane 5, et ce, sans se mélanger.

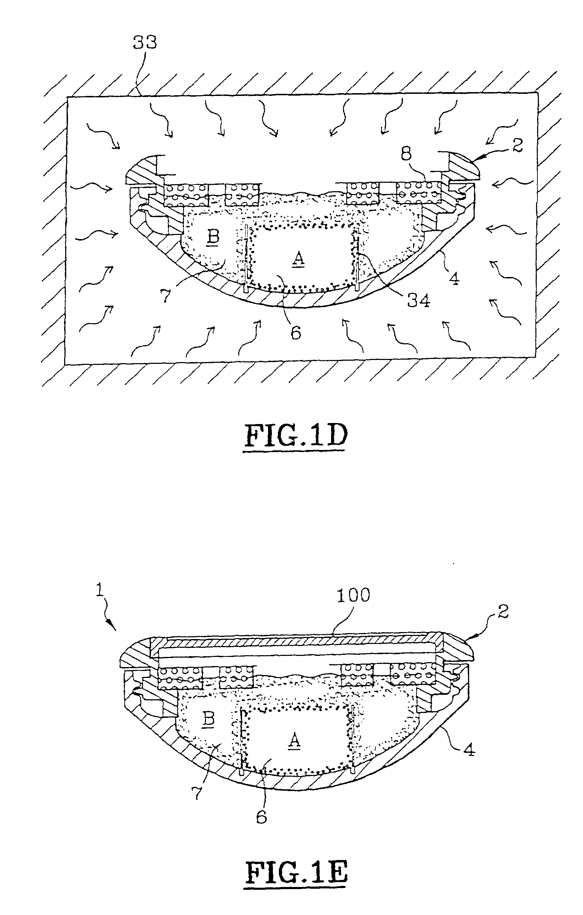

Lors de l'étape suivante représentée à la figure 1D, le boîtier 1 ainsi rempli, est introduit dans une étuve ventilée 33, chauffée à 45°C pendant une période d'environ 8 heures (pour les formules à base de plâtre), de manière accélérer le séchage des produits.

A la figure 1E, le boîtier est retiré de l'étuve. L'ouverture 14 est obturée au moyen d'un bouchon 100, qui peut être claqué, collé ou soudé.

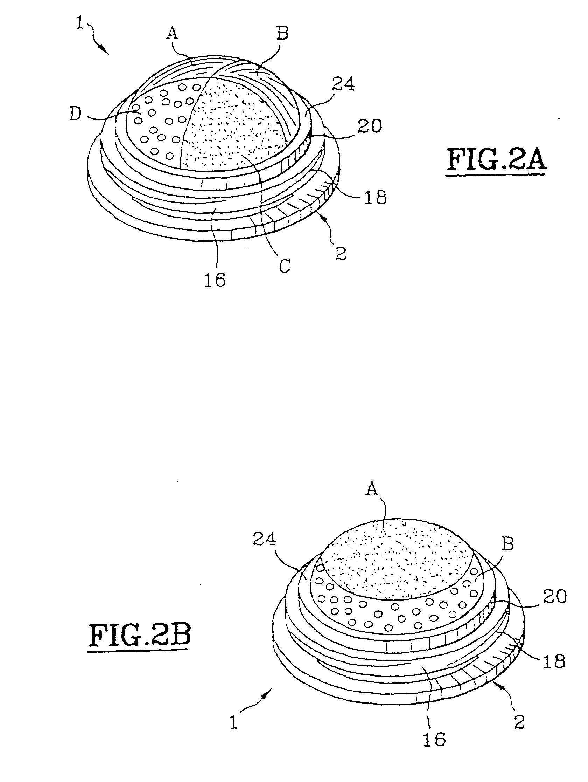

La figure 2A représente un premier boîtier 1, rempli selon le procédé décrit précédemment en référence aux figures 1A à 1E. La surface libre du produit à l'intérieur du réceptacle forme un dôme correspondant à la forme du dôme formée par le couvercle. Le boîtier contient quatre produits A, B, C, D, de couleurs différentes, disposés dans des zones angulaires formant chacune un angle d'environ 90°. Ces volumes sont obtenus, en disposant sur la surface interne du couvercle, avant remplissage, une membrane en forme de croix. La disposition des produits A et B dans le boîtier de la figure 2B, est identique à celle décrite en référence aux figures 1A à 1E.

Dans la description détaillée qui précède, il a été fait référence à des modes de réalisation préférés de l'invention. Il est évident que des variantes peuvent y être apportées sans s'écarter de l'invention telle que revendiquée ci-après.

## Revendications

1. Procédé de remplissage d'un boîtier (1) d'axe X, par coulage en phase liquide d'au moins deux produits A et B contenant un solvant, et ne devant pas se mélanger de manière sensible sur au moins une partie de la hauteur axiale du boîtier, ledit boîtier comportant un fond (2) et un couvercle (4), ledit procédé consistant à : a) monter dans le boîtier, une fine membrane (5) en un matériau soluble dans le solvant d'au moins un des produits, la membrane (5) étant disposée de manière à délimiter à l'intérieur du boîtier, au moins un premier volume (6) et un second volume (7), lesdits premier et second volumes (6, 7) étant isolés l'un de l'autre sur au moins une partie de la hauteur axiale du boîtier; b) couler le produit A dans le premier volume (6), et le produit B dans le second volume (7); et c) laisser sécher, de manière à figer lesdits produits, la membrane (5) se solubilisant dans ledit solvant, lors du figeage des produits A et B à l'intérieur du premier volume (6), respectivement du second volume (7).

2. Procédé selon la revendication 1 caractérisé en ce que les deux produits A, B sont coulés simultanément.

3. Procédé selon la revendication 1 ou 2, caractérisé en ce que les deux volumes (6, 7) sont concentriques.

4. Procédé selon l'une quelconque des revendications précédentes, caractérisé en ce que ledit solvant est de l'eau, la membrane (5) étant constituée de gélatine animale ou végétale, d'alcool polyvinylique de type Hydrolène®, Polyviol®, Elvanol®, Mowiol® ou Phodoviol®.

5. Procédé selon l'une quelconque des revendications précédentes, caractérisé en ce que lesdits produits A et B sont de couleur différente.

6. Procédé selon la revendication 4 ou 5, caractérisé en ce que les produits A et B sont des produits à base de plâtre et d'eau, auxquels sont ajoutées différentes charges (colorant/pigment, nacre, conservateur, mica, parfum, etc.).

7. Procédé selon la revendication 5 ou 6, caractérisé en ce que les produits A et B sont des fards à paupières, des fards à joues, des fonds de teint, etc..

8. Procédé selon l'une quelconque des revendications précédentes, caractérisé en ce que, après figeage des produits, le boîtier est introduit dans une étuve ventilée (33) de manière à accélérer le séchage.

9. Procédé de remplissage selon l'une quelconque des revendications précédentes caractérisé en ce que lesdits produits sont coulés au travers d'une ouverture (14) ménagée dans le fond (2), après avoir retourné le boîtier, le couvercle (4) faisant office de fond lors du coulage des produits, ladite membrane (5) étant montée sur le couvercle (4).

10. Procédé selon la revendication 9 caractérisé en ce que ladite membrane (5) présente une première extrémité (11) montée sur le couvercle (4), et une seconde extrémité (10), libre, opposée à ladite première extrémité (11), la membrane (5) étant de hauteur axiale inférieure à la hauteur axiale du boîtier (1), les deux volumes (6, 7) communiquant entre eux au niveau de ladite seconde extrémité (10), le produit A est coulé sur une première hauteur sensiblement égale à la hauteur axiale de la membrane (5), le produit B étant coulé sur une hauteur supérieure à la hauteur axiale de la membrane (5), de manière à permettre, lors de la solidification des produits A et B, l'accrochage du produit A par le produit B, des moyens (8) étant prévus au voisinage du fond du boîtier, pour permettre l'accrochage du produit B dans le boîtier.

11. Procédé selon la revendication 10, caractérisé en ce que lesdits moyens d'accrochage comportent au moins un bloc de mousse (8) à cellules ouvertes ou semi ouvertes.

12. Procédé selon l'une quelconque des revendications 9 à 11, caractérisé en ce que la membrane (5) est maintenue sur le couvercle, au moyen de rainures (15) réalisées sur une face interne du couvercle, et aptes à recevoir un bord d'extrémité (11) de ladite membrane (5).

13. Procédé selon l'une quelconque des revendications 9 à 11 caractérisé en ce qu'un renfoncement (ou une surépaisseur) est réalisé(e) sur la face interne du couvercle (4), ledit renfoncement (ou ladite surépaisseur) étant délimité(e) par un bord rentrant (ou saillant) par rapport à la surface interne du couvercle, contre lequel un bord d'extrémité (11) de la membrane (5) est en appui, la surface libre du produit en regard du couvercle, présentant une surépaisseur (ou un renfoncement) de section correspondant sensiblement à la section dudit renfoncement (ou à ladite surépaisseur) du couvercle.

14. Procédé selon l'une quelconque des revendications 9 à 11 caractérisé en ce que la membrane (5) est maintenue sur le couvercle, par collage ou soudure d'un bord d'extrémité (11) de ladite membrane sur une face interne du couvercle (4).

15. Procédé selon l'une quelconque des revendications 9 à 11 caractérisé en ce que la membrane (5) est réalisée par bi-injection avec le couvercle.

16. Boîtier (1) rempli au moyen du procédé selon l'une quelconque des revendications précédentes.

17. Boîtier selon la revendication précédente, caractérisé en ce que, au moins le couvercle (4) est transparent.

## Patentansprüche

1. Verfahren zum Füllen eines Gehäuses (1) mit einer Achse X durch Gießen von mindestens zwei Produkten A und B in flüssiger Phase, die ein Lösungsmittel enthalten und sich zumindest über einen Teil der axialen Höhe des Gehäuses nicht wesentlich vermischen dürfen, wobei das Gehäuse einen Boden (2) und einen Deckel (4) aufweist, wobei das Verfahren darin besteht: a) in dem Gehäuse mindestens eine dünne Membran (5) aus einem im Lösungsmittel mindestens eines der Produkte löslichen Material anzubringen, wobei die Membran (5) so angeordnet wird, daß sie im Gehäuse mindestens ein erstes Volumen (6) und ein zweites Volumen (7) begrenzt, wobei das erste und das zweite Volumen (6, 7) voneinander über mindestens einen Teil der axialen Höhe des Gehäuses getrennt sind, b) das Produkt A in das erste Volumen (6) und das Produkt B in das zweite Volumen (7) zu gießen, und c) die Produkte so trocknen zu lassen, daß sie erstarren, wobei die Membran (5) sich während des Erstarrens der Produkte A und B im ersten (6) bzw. im zweiten Volumen (7) im Lösungsmittel auflöst.

2. Verfahren nach Anspruch 1, dadurch gekennzeichnet, daß die beiden Produkte A, B gleichzeitig gegossen werden.

3. Verfahren nach Anspruch 1 oder 2, dadurch gekennzeichnet, daß die beiden Volumen (6, 7) konzentrisch sind.

4. Verfahren nach einem der vorhergehenden Ansprüche, dadurch gekennzeichnet, daß das Lösungsmittel Wasser ist, wobei die Membran (5) aus tierischer oder pflanzlicher Gelatine, Polyvinylalkohol der Art Hydrolen®, Polyviol®, Elvanol®, Mowiol® oder Phodoviol® besteht.

5. Verfahren nach einem der vorhergehenden Ansprüche, dadurch gekennzeichnet, daß die Produkte A und B unterschiedliche Farben aufweisen.

6. Verfahren nach Anspruch 4 oder 5, dadurch gekennzeichnet, daß die Produkte A und B Produkte auf der Basis von Gips und Wasser sind, denen verschiedene Füllstoffe zugefügt werden (Färbemittel/Pigment, Perlmutt, Konservierungsmittel, Glimmer, Parfüm usw.).

7. Verfahren nach Anspruch 5 oder 6, dadurch gekennzeichnet, daß die Produkte A und B Lidschatten, Wangenrouge, Fonds de Teint usw. sind.

8. Verfahren nach einem der vorhergehenden Ansprüche, dadurch gekennzeichnet, daß nach dem Erstarren der Produkte das Gehäuse in einen belüfteten Trokkenofen (33) eingebracht wird, um das Trocknen zu beschleunigen.

9. Füllverfahren nach einem der vorhergehenden Ansprüche, dadurch gekennzeichnet, daß die Produkte durch eine im Boden (2) angebrachte Öffnung (14) gegossen werden, nachdem der Behälter umgedreht wurde, wobei der Deckel (4) beim Gießen der Produkte als Boden dient und die Membran (5) am Deckel (4) befestigt ist.

10. Verfahren nach Anspruch 9, dadurch gekennzeichnet, daß die Membran (5) ein erstes Ende (11), das am Deckel (4) befestigt ist, und ein zweites, freies Ende (10) aufweist, das dem ersten Ende (11) entgegengesetzt angeordnet ist, wobei die Membran (5) eine geringere axiale Höhe aufweist als die axiale Höhe des Gehäuses (1), wodurch die beiden Volumen (6, 7) in Höhe des zweiten Endes (10) miteinander in Verbindung stehen, wobei das Produkt A bis auf eine erste Höhe im wesentlichen gleich der axialen Höhe der Membran (5) gegossen wird, während das Produkt B bis auf eine Höhe gegossen wird, die höher ist als die axiale Höhe der Membran (5), um bei der Verfestigung der Produkte A und B das Haften des Produkts A am Produkt B zu ermöglichen, wobei in der Nähe des Bodens des Gehäuses Einrichtungen (8) vorgesehen sind, um die Befestigung des Produkts B im Gehäuse zu ermöglichen.

11. Verfahren nach Anspruch 10, dadurch gekennzeichnet, daß die Befestigungseinrichtungen mindestens einen Schaumstoffblock (8) mit offenen oder halboffenen Zellen aufweisen.

12. Verfahren nach einem der Ansprüche 9 bis 11, dadurch gekennzeichnet, daß die Membran (5) am Deckel mittels Nuten (15) gehalten wird, die auf einer Innenseite des Deckels ausgearbeitet sind und einen Endrand (11) der Membran (5) aufnehmen können.

13. Verfahren nach einem der Ansprüche 9 bis 11, dadurch gekennzeichnet, daß auf der Innenseite des Deckels (4) ein Rücksprung (oder eine Überdicke) ausgearbeitet ist, wobei dieser Rücksprung (oder diese Überdicke) von einem in bezug auf die Innenfläche des Deckels rückspringenden (oder vorspringenden) Rand begrenzt wird, gegen den ein Endrand (11) der Membran (5) anliegt, wobei die freie Fläche des Produkts gegenüber dem Deckel eine Überdicke (oder einen Rücksprung) mit einem im wesentlichen dem Querschnitt des Rücksprungs (oder der Überdicke) des Deckels entsprechenden Querschnitt aufweist.

14. Verfahren nach einem der Ansprüche 9 bis 11, dadurch gekennzeichnet, daß die Membran (5) am Deckel durch Kleben oder Schweißen eines Endrands (11) der Membran an einer Innenfläche des Deckels (4) befestigt wird.

15. Verfahren nach einem der Ansprüche 9 bis 11, dadurch gekennzeichnet, daß die Membran (5) durch Bi-Injektion mit dem Deckel hergestellt wird.

16. Gehäuse (1), das mittels des Verfahrens gemäß einem der vorhergehenden Ansprüche gefüllt wird.

17. Gehäuse nach dem vorhergehenden Anspruch, dadurch gekennzeichnet, daß mindestens der Deckel (4) durchsichtig ist.

## Claims

1. Method of filling a case (1) of axis X by pouring in, in the liquid phase, at least two products A and B containing a solvent, which products must not mix significantly over at least part of the axial height of the case, the said case possessing a base (2) and a lid (4), the said method comprising: a) installing within the case a thin membrane (5) made of a material which is soluble in the solvent of at least one of the products, the membrane (5) being arranged in a manner such as to define, within the case, at least a first space (6) and a second space (7), the said first and second spaces (6, 7) being isolated from each other over at least part of the axial height of the case, b) pouring the product A into the first space (6) and the product B into the second space (7), and c) allowing to dry, in a manner such as to set the said products, the membrane (5) becoming solubilized in the said solvent during the setting of the products A and B within the first space (6) and the second space (7), respectively.

2. Method according to Claim 1, characterized in that the two products A, B are poured simultaneously.

3. Method according to Claim 1 or 2, characterized in that the two spaces (6, 7) are concentric.

4. Method according to any one of the preceding claims, characterized in that the said solvent is water, the membrane (5) being formed of animal or plant gelatin or a polyvinyl alcohol of the type of Hydrolène®, Polyviol®, Elvanol®, Mowiol®, or Phodoviol®.

5. Method according to any one of the preceding claims, characterized in that the said products A and B are of different colours.

6. Method according to Claim 4 or 5, characterized in that products A and B are products based on plaster and water, to which are added various fillers, (colorant/pigment, mother-of-pearl, preservative, mica, perfume, etc.).

7. Method according to Claim 5 or 6, characterized in that products A and B are eye shadows, blushers, foundations, etc.

8. Method according to any one of the preceding claims, characterized in that, after setting of the products, the case is introduced into a ventilated oven (33) so as to accelerate drying.

9. Filling method according to any one of the preceding claims, characterized in that the said products are poured through an aperture (14) made in the base (2), the case having been inverted, the lid (4) serving as a base during the pouring of the products, and the said membrane (5) being fitted on the lid (4).

10. Method according to Claim 9, characterised in that the said membrane (5) possesses a first end (11) fitted on the lid (4) and a second, free end (10), opposite the said first end (11), the membrane (5) being of an axial height less than the axial height of the case (1), the two spaces (6, 7) intercommunicating at the level of the said second end (10), the product A being poured over a first height substantially equal to the axial height of the membrane (5), the product B being poured over a height greater than the axial height of the membrane (5); so as to permit, during the solidification of products A and B, the adhesion of product A by product B, means (8) being provided in the vicinity of the base of the case to permit the adhesion. of product B in the case.

11. Method according to Claim 10, characterized in that the said adhesion means comprise at least one block of foam (8) having open or semi-open cells.

12. Method according to any one of Claims 9 to 11, characterized in that the membrane (5) is retained on the lid by means of grooves (15) made on an inner surface of the lid and suitable for receiving an end edge (11) of the said membrane (5).

13. Method according to any one of Claims 9 to 11, characterised in that an indentation (or an excess thickness) is provided on the inner surface of the lid (4), the said indentation (or the said excess thickness) being defined by an edge that is recessed (or projecting) relative to the inner surface of the lid, against which an end edge (11) of the membrane (5) bears, the free surface of the product facing the lid having an excess thickness (or an indentation) of cross section substantially corresponding to the cross section of the said indentation (or to the said excess thickness) of the lid.

14. Method according to any one of Claims 9 to 11, characterized in that the membrane (5) is retained on the lid by bonding or welding of an end edge (11) of the said membrane to an inner surface of the lid (4).

15. Method according to any one of Claims 9 to 11, characterized in that the membrane (5) is produced by dual injection moulding with the lid.

16. Case (1) filled by means of the method according to any one of the preceding claims.

17. Case according to the preceding claim, characterized in that at least the lid (4) is transparent.
